# DEMANDE DE BREVET EUROPEEN

(11) **EP 1 607 732 A1**
(43) Date de publication de la demande: **21.12.2005**
(21) Numéro de dépôt: 05354023.3
(22) Date de dépôt: 08.06.2005
(51) Int. Cl.: G01N 3/08

(54) **Dispositif et procédé de contrôle des paramètres physiques et mécaniques d'une gaine d'emballage à film plastique étirable**

(30) Priorité: 17.06.2004 FR 0406557
(71) Demandeur: Thimon, 73420 Méry (FR)
(72) Inventeur: Martin-Cocher, Jean-Paul Charles, 73290 La Motte Servolex (FR); Jaconelli, Georges, 73100 Aix-les-Bains (FR)
(74) Mandataire: Hecké, Gérard

(57) **Abrégé**

Procédé de contrôle des caractéristiques physiques et mécaniques d'une gaine d'emballage réalisée à partir d'un film en matière plastique souple étirable, consistant à attacher un échantillon 11 du film entre une partie fixe et une partie mobile, et à mesurer la tension mécanique dans le film au moyen d'un capteur de force 16 lors du déplacement de la partie mobile. L'échantillon 11 du film est posé à plat sur une plaque d'appui 22 horizontale du chariot 14, lequel est déplacé en translation horizontale pour déterminer les paramètres d'étirage et/ou de frottement du film. La plaque d'appui et de glissement (22) est agencée au-dessus d'une plaque chauffante (24) pour mesurer les caractéristiques du film à une température prédéterminée.

## Description

### Domaine technique de l'invention

L'invention est relative à un dispositif et à un procédé de contrôle des caractéristiques physiques et mécaniques d'une gaine d'emballage réalisée à partir d'un film en matière plastique souple étirable, et comportant :
- des moyens de fixation d'un échantillon de film entre une partie fixe et une partie mobile solidaire d'un chariot
- un capteur de force destiné à délivrer un signal de mesure représentatif de l'effort généré par la tension mécanique dans le film lors du déplacement du chariot,
- un actionneur pour l'entraînement en translation du chariot pendant une course prédéterminée,
- et un automate programmable raccordé au capteur de force et à l'actionneur pour gérer les données nécessaires aux tests d'étirage et/ou de frottement du film.

### État de la technique

Une machine d'emballage ou de suremballage de charges, en particulier de charges palettisées, a pour fonction de constituer une housse à partir d'une gaine de matière plastique étirable, à l'étirer transversalement et éventuellement longitudinalement, et à déposer cette housse sur la charge. Un tel procédé est décrit dans le document EP-A-1331168.

La mise en oeuvre de ce procédé implique des qualités de matières et d'état de surface des gaines utilisées, garantissant la fiabilité de l'opération et une bonne cohésion des produits constituant la charge. Cette cohésion est nécessaire lors du transport, du déchargement, et du déstockage des produits palettisés.

La fabrication de cette gaine étirable nécessite l'utilisation de machines d'extrusion performantes. Les caractéristiques de frottement du film sur lui-même, notamment lors du plissage et du déplissage de la housse pendant la dépose, ou sur les pièces de la machine assurant l'étirage et la dépose de ce film, sont variables selon en fonction de la température ambiante.

Le professionnalisme des fabricants de gaine étirable et de machines d'emballage, a fait apparaître le besoin de quantifier ces caractéristiques et à les contrôler lors de l'exploitation industrielle de ce procédé. Ce suivi est un élément majeur de fiabilité pour les utilisateurs.

Il existe des bancs de tests laboratoire permettant de mesurer sur des échantillons de petites dimensions, le coefficient de frottement du film sur lui-même ou sur une plaque de matière définie. Il est également connu de mesurer les forces de traction nécessaires à l'allongement d'un échantillon, avec ses caractéristiques de retour élastique et de relaxation voire de réaction, en conformité avec les normes d'étirage des films d'emballage, notamment les normes françaises NFT 54.196.1 et NFT 54.196.2, et d'analyser l'influence de la température sur certaines caractéristiques mécaniques. La courbe de réaction détermine les capacités du film à réagir contre un éventuel choc intervenant après sa dépose sur la charge, par exemple lors du transport de la charge.

Aucun banc actuel n'est capable d'effectuer une combinaison de mesures parfaitement adaptées à cet effet.

Les documents GB 2345145 et US 6467357 décrivent des dispositifs de mesure de la traction et de la résistance de bandes, mais pas de film plastique souple étirable.

### Objet de l'invention

L'invention a pour but de remédier à ces inconvénients, et d'élaborer un appareillage de laboratoire permettant de mesurer les paramètres physiques et mécaniques d'un échantillon de film plastique étirable sur le même dispositif de test, et à différentes températures, pour garantir la fiabilité de l'opération de houssage intervenant par la suite sur la machine d'emballage.

Selon l'invention, le chariot comprend une plaque d'appui et de glissement horizontale sur laquelle repose l'échantillon à plat, la plaque d'appui (22) étant agencée au-dessus d'une plaque chauffante pour mesurer les caractéristiques du film à une température prédéterminée. La plaque chauffante est alimentée à cet effet par un régulateur de température coopérant avec un capteur thermique.

Selon un mode de réalisation préférentiel, les moyens de fixation de l'échantillon sont formés par une première barrette de pincement fixe, et une deuxième barrette de pincement solidaire du chariot mobile, lesdites barrettes étant parallèles l'une à l'autre en s'étendant transversalement par rapport à la direction longitudinale de déplacement du chariot.

L'entraînement du chariot intervient au moyen d'un motoréducteur à pignon codeur coopérant avec un élément de transmission formé par une crémaillère ou une courroie s'étendant dans la direction longitudinale de déplacement du chariot. Tout autre actionneur peut bien entendu être utilisé.

Le capteur de force est porté par un châssis fixe, et est en appui contre un support portant la barrette de pincement fixe.

L'invention concerne également un procédé de contrôle des caractéristiques physiques et mécaniques d'étirage et de frottement d'une gaine d'emballage réalisée à partir d'un film en matière plastique souple étirable, consistant à attacher un échantillon du film entre une partie fixe et une partie mobile, et à mesurer la tension mécanique dans le film en fonction de son allongement lors du déplacement de la partie mobile, caractérisé en ce que caractérisé en ce que l'échantillon du film est posé à plat sur une surface d'appui horizontale de la partie mobile, laquelle est déplacée en translation horizontale pour déterminer les paramètres d'étirage et/ou de frottement du film à des températures prédéterminées, le contrôle de frottement de l'échantillon s'effectuant soit par glissement sur la plaque d'appui horizontale, de manière à obtenir un contact film sur acier représentatif du frottement du film sur les doigts de houssage de la machine, soit par glissement interne le long d'un deuxième échantillon fixe, de manière à obtenir un contact film sur film représentatif du frottement du film sur lui-même pendant la phase de déplissage et de dépose.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 est une vue schématique en perspective d'un dispositif de contrôle selon l'invention, prévu pour un test d'étirage d'un échantillon de film.
La figure 2 montre une vue partielle selon la flèche F1 de la figure 1.
La figure 3 représente le dispositif de la figure 1 prévu pour un test de frottement du film.
La figure 4 montre une vue partielle selon la flèche F2 de la figure 3.
La figure 5 illustre le circuit électrique de commande du dispositif de contrôle.
La figure 6 montre deux diagrammes A et B de mesure d'étirage à froid et à chaud pour un échantillon quadrangulaire de film de même nature et de mêmes dimensions, chaque diagramme indiquant la force maximale à 100% d'étirage, et la valeur finale à 80% d'étirage.
La figure 7 représente les courbes A et B de la figure 6, avec en plus la valeur de réaction à 100% d'étirage.
La figure 8 montre le diagramme d'un cycle de glissement permettant de déterminer le coefficient de frottement du film sur les doigts de préhension de la machine et sur la charge lors du houssage.

### Description d'un mode de réalisation préférentiel

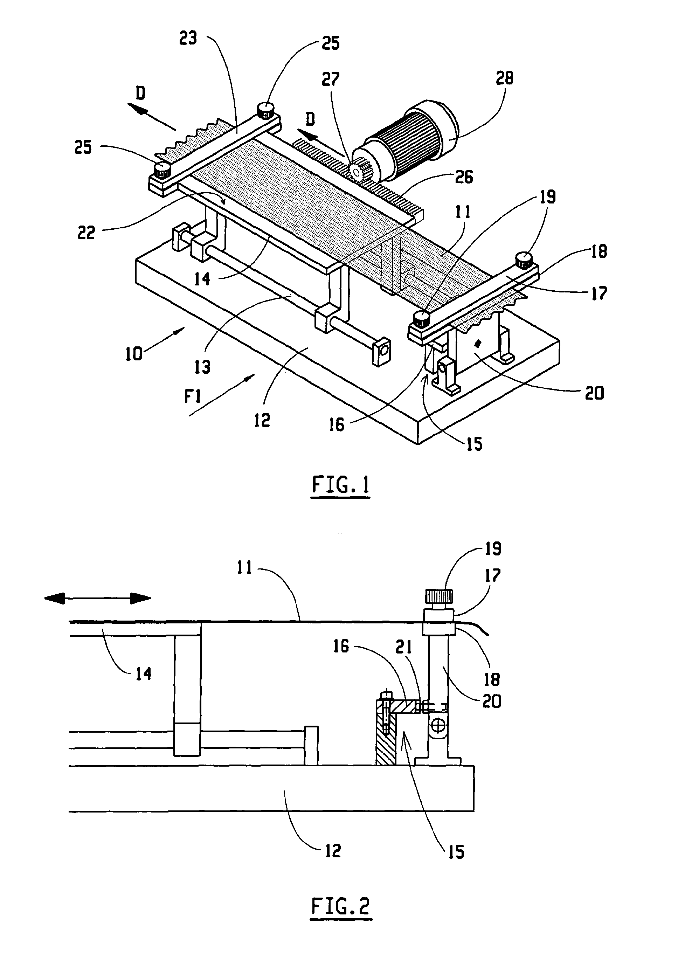

En référence aux figures 1 à 4, le dispositif de contrôle (10) d'un échantillon (11) de gaine étirable, comporte un châssis (12) fixe horizontal portant un rail (13) de guidage horizontal destiné au déplacement en translation d'un chariot (14) mobile. La gaine étirable est formée à partir d'un film en matière plastique, notamment en polyéthylène, ayant des caractéristiques d'étirage spécifiques pour chaque application d'emballage.

Un système de mesure (15) est également fixé sur la face supérieure du châssis (12), et est composé d'un capteur de force (16) analogique et d'une première barrette (17) de pincement de l'échantillon (11). L'une des extrémités de l'échantillon (11) peut ainsi être fixée par la première barrette (17) contre une plaquette (18) fixe à l'aide d'un premier jeu de deux vis à molettes (19) de blocage.

L'ensemble barrette (17) et plaquette (18) est porté par un support (20) articulé à la base par rapport au châssis (12) fixe. Le support (20) se trouve en appui contre le capteur de force (16) par l'intermédiaire d'une vis d'appui (21), de manière à permettre la mesure de l'effort généré par la tension mécanique du film de l'échantillon (11).

Le chariot (14) mobile comporte une plaque d'appui de glissement (22), une deuxième barrette (23) de pincement de l'autre extrémité de l'échantillon (11) par un deuxième jeu de vis à molettes (25), et une plaque chauffante (24). L'entraînement en translation du chariot (14) motorisé, s'effectue au moyen d'un élément de transmission formé à titre d'exemple par une crémaillère (26) sur laquelle engrène un pignon codeur (27) d'un motoréducteur (28) rotatif. La crémaillère (26) peut être remplacé par une chaîne ou une courroie crantée coopérant avec des pignons de renvoi.

La crémaillère (26) s'étend le long d'un chant latéral du chariot (14) dans la direction longitudinale de déplacement indiquée par la flèche D. La plaque d'appui (22) horizontale est réalisée de préférence en acier inoxydable, et est superposée à la plaque chauffante (24) avec un bon contact thermique.

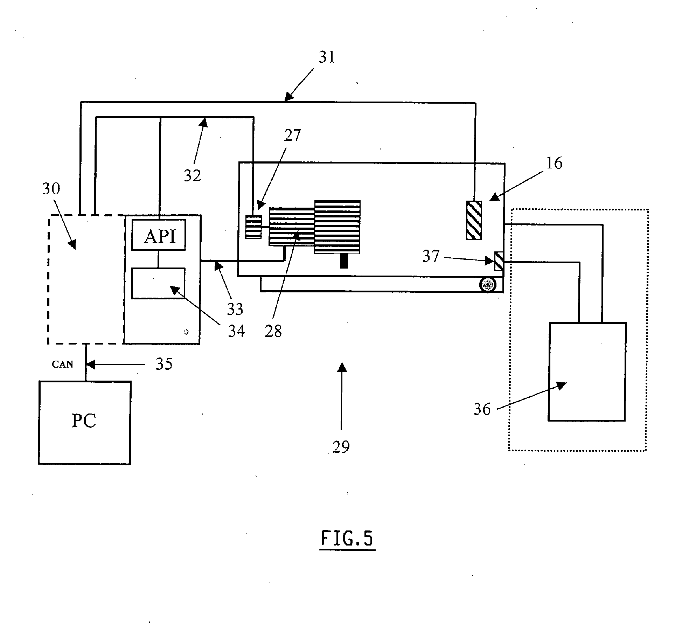

Sur la figure 5, le circuit électrique (29) du dispositif de contrôle utilise un automate API programmable et un circuit d'acquisition (30) de données qui reçoit les signaux de mesure en provenance du capteur de force (16) et du codeur (27) par l'intermédiaire de deux conducteurs d'entrées (31, 32).

L'automate API est destiné à délivrer un signal de commande au motoréducteur (28) à travers le conducteur de sortie (33). Un afficheur (34) de l'automate API permet d'afficher les résultats de mesures, et des moyens de sélection permettent le choix du cycle de mesure d'étirage ou de frottement. Ces moyens de sélection peuvent être intégrés dans le circuit PC connecté au circuit d'acquisition (30) par une liaison (35) à bus CAN. Le circuit PC permet d'entrer dans le circuit d'acquisition (30), les paramètres d'identification du film et les consignes de température. Un logiciel de gestion des programmes de mesures pilote l'automate API pour déterminer les paramètres d'emballage et de mécanisation.

Le traitement des données est par exemple effectué par interface informatique personnalisé, intégrant tous les paramétrages, et permettant une gestion complète des résultats, y compris une visualisation des courbes de valeurs et l'affichage des valeurs remarquables.

La plaque chauffante (24) électrique est alimentée par un régulateur de température (36) coopérant avec un capteur thermique (37), de manière à maintenir la plaque d'appui (22) à une température prédéterminée pendant la durée du test.

Le fonctionnement du dispositif de contrôle (10) est le suivant :

### - Test d'étirage

Sur les figures 1 et 2, on positionne un échantillon (11) de film plastique entre la première barrette (17) fixe et la deuxième barrette (23) du chariot (14) mobile. On sélectionne le mode étirage pour actionner le ou les cycles d'étirage permettant de mesurer les paramètres de comportement du film en condition de travail sur la charge à emballer. Le motoréducteur (28) entraîne le chariot (14) dans le sens de la flèche D de manière à étirer le film pendant une course prédéterminée. Le capteur de force (16) envoie au circuit d'acquisition (30) un signal de mesure de la force de tension appliquée au film en fonction du déplacement à partir d'une position initiale de repos. La longueur maximale d'étirage de l'échantillon (11) correspond à la longueur de la crémaillère (26).

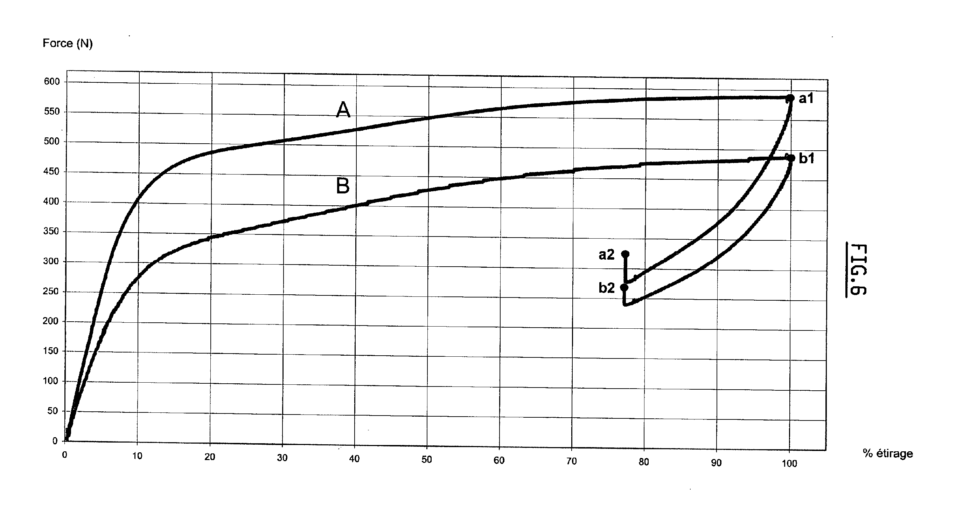

La figure 6 montre, à titre d'exemple, deux diagrammes A et B de mesure d'étirage à froid et à chaud pour un échantillon (11) quadrangulaire ayant une longueur de 360 mm , une largeur de 200 m, et une épaisseur de 140 microns. Il s'agit d'un film HD 325807 à base de polyéthylène. La mesure à froid (courbe A) s'effectue à la température ambiante sans chauffer la plaque chauffante (24). La mesure à chaud est opérée à 38°C par exemple, suite au chauffage de la plaque (24) par le régulateur de température (36). Les forces d'étirage sont plus importantes à froid pour un échantillon de même nature. À froid, la force à 100% d'étirage au point a1 de la courbe A est de 589 N, tandis que la valeur finale à 80% d'étirage au point a2 est de 325 N. A chaud, ces valeurs diminuent. La force à 100% d'étirage au point b1 de la courbe B est de 493 N, alors que la valeur finale à 80% d'étirage au point b2 est de 270 N. Ce cycle d'étirage à 100% et de retour à 80% est représentatif du cycle de contrôle d'étirabilité selon les nornes françaises NFT 54.196.1 et NFT 54.196.2 d'un film plastique d'emballage.

Sur la figure 7, on peut compléter la mesure d'étirage avec, en plus, la valeur de réaction à 100%. On obtient ainsi à partir du point a2, le point a3 (courbe A à froid) qui nécessite une force d'étirage supérieure à celle du point a1, et le point b3 (courbe B à chaud) également situé au-dessus du point b1. La courbe de réaction est également conforme aux normes précitées.

À chaque type d'échantillon correspond une courbe d'étirage spécifique pour une température donnée. Les cycles d'étirage, selon les figures 6 et 7, permettent ainsi de définir les paramètres d'emballage et notamment, la tenue mécanique, et la force élastique appliquée par la housse étirable sur la charge à emballer.

### - Test de glissement du film

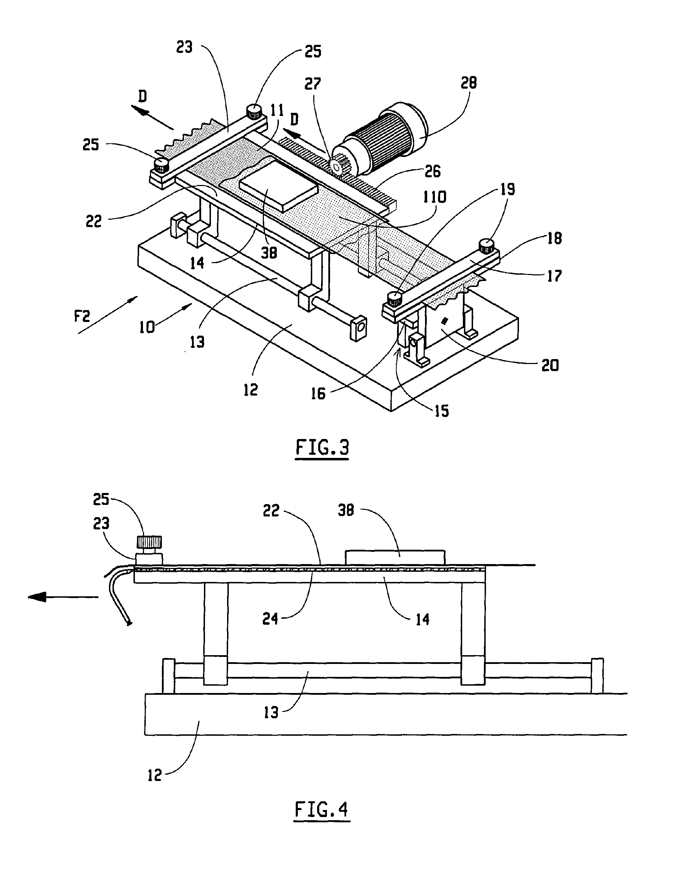

Sur la figure 3, en plus du premier échantillon (11) intercalé entre les deux barrettes (17, 23) et en contact avec la plaque d'appui et de glissement (22) du chariot (14), on superpose un deuxième échantillon (110) fixe sur le premier échantillon (11) en le solidarisant à une extrémité sur la première barrette (17) et en posant un poids (38) de 1 kg sur l'autre extrémité. Le mode frottement est activé par les moyens de sélection pour enclencher les cycles de glissement du film permettant de mesurer les paramètres de frottement du film en condition de travail sur la machine de houssage, et notamment le frottement sur les doigts d'étirage, et sur la charge lors du houssage.

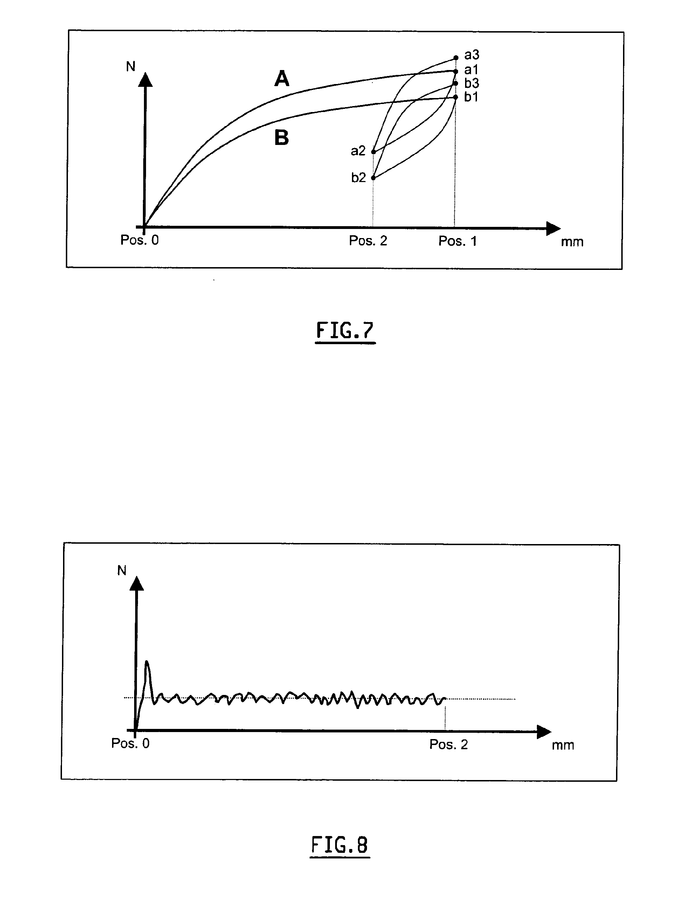

La figure 8 montre le diagramme de l'un des cycles de glissement, illustrant la mesure de la force par rapport au déplacement du film avec l'application d'un poids (38) de 1 kg. A chaque diagramme correspond un coefficient de frottement prédéterminé.

L'actionnement du motoréducteur (28) permet d'effectuer quatre types de cycles de glissement, à savoir d'une part la mesure du frottement intérieur de l'échantillon (11) sur la plaque d'appui (22) en acier, à froid, puis à chaud, et d'autre part la mesure du frottement entre les deux échantillons de film (11, 110), également à froid et à chaud.

Les mesures préalables des paramètres d'étirage et de frottement sur un échantillon d'un film d'emballage permettent de vérifier les caractéristiques physiques du film pour garantir la fiabilité de l'opération de houssage, et une cohésion efficace des produits constituant la charge à emballer.

Le déplacement du chariot (14) mobile pour l'étirage du film peut, bien entendu, être opéré par un actionneur quelconque, et le capteur de force (16) peur être remplacé par tout autre détecteur de tension mécanique.

## Revendications

1. Dispositif de contrôle des caractéristiques physiques et mécaniques d'une gaine d'emballage réalisée à partir d'un film en matière plastique souple étirable, et comportant :
- des moyens de fixation d'un échantillon (11) de film entre une partie fixe et une partie mobile solidaire d'un chariot (14),
- un capteur de force (16) destiné à délivrer un signal de mesure représentatif de l'effort généré par la tension mécanique dans le film lors du déplacement du chariot (14),
- un actionneur pour l'entraînement en translation du chariot (14) pendant une course prédéterminée,
- et un automate (API) programmable raccordé au capteur de force (16) et à l'actionneur pour gérer les données nécessaires aux tests d'étirage et/ou de frottement du film,
**caractérisé en ce que** le chariot (14) comprend une plaque d'appui et de glissement (22) horizontale sur laquelle repose l'échantillon (11) à plat, et que la plaque d'appui (22) est agencée au-dessus d'une plaque chauffante (24) pour mesurer les caractéristiques du film à une température prédéterminée.

2. Dispositif de contrôle selon la revendication 1, **caractérisé en ce que** les moyens de fixation de l'échantillon (11) sont formés par une première barrette de pincement (17) fixe, et une deuxième barrette de pincement (23) solidaire du chariot 14) mobile, lesdites barrettes (17,23) étant parallèles l'une à l'autre en s'étendant transversalement par rapport à la direction longitudinale de déplacement du chariot (14).

3. Dispositif de contrôle selon la revendication 2, **caractérisé en ce que** les barrettes sont équipées chacune d'un jeu de vis de blocage (19, 25) pour le maintien des deux extrémités de l'échantillon (11).

4. Dispositif de contrôle selon la revendication 1, **caractérisé en ce que** la plaque chauffante (24) est alimentée par un régulateur de température (36) coopérant avec un capteur thermique (37).

5. Dispositif de contrôle selon la revendication 1, **caractérisé en ce que** l'actionneur du chariot (14) comprend un motoréducteur (28) à pignon codeur (27) coopérant avec un élément de transmission du chariot (14).

6. Dispositif de contrôle selon la revendication 5, **caractérisé en ce que** l'élément de transmission est formé par une crémaillère (26) s'étendant dans la direction longitudinale de déplacement du chariot (14).

7. Dispositif de contrôle selon la revendication 5, **caractérisé en ce que** l'élément de transmission est formé par une chaîne ou une courroie coopérant avec des pignons.

8. Dispositif de contrôle selon la revendication 1, **caractérisé en ce que** le capteur de force (16) est porté par un châssis (12) fixe, lequel est équipé d'un rail (13) de guidage horizontal du chariot (14) mobile.

9. Dispositif de contrôle selon la revendication 3, **caractérisé en ce que** le capteur de force (16) est en appui contre un support (20) articulé et portant la première barrette de pincement (23).

10. Procédé de contrôle des caractéristiques physiques et mécaniques d'étirage et de frottement d'une gaine d'emballage réalisée à partir d'un film en matière plastique souple étirable, consistant à attacher un échantillon du film entre une partie fixe et une partie mobile, et à mesurer la tension mécanique dans le film en fonction de son allongement lors du déplacement de la partie mobile, **caractérisé en ce que** l'échantillon (11) du film est posé à plat sur une surface d'appui (22) horizontale de la partie mobile, laquelle est déplacée en translation horizontale pour déterminer les paramètres d'étirage et/ou de frottement du film à des températures prédéterminées, le contrôle de frottement de l'échantillon (11) s'effectuant soit par glissement sur la plaque d'appui (22) horizontale, de manière à obtenir un contact film sur acier représentatif du frottement du film sur les doigts de houssage de la machine, soit par glissement interne le long d'un deuxième échantillon (110) fixe, de manière à obtenir un contact film sur film représentatif du frottement du film sur lui-même pendant la phase de déplissage et de dépose.

11. Procédé de contrôle selon la revendication 10, **caractérisé en ce que** la mesure du frottement est effectuée sur un échantillon (11) non étiré.

12. Procédé de contrôle selon la revendication 10, **caractérisé en ce que** la mesure du frottement est opérée immédiatement après avoir effectué l'étirage de l'échantillon (11).

13. Procédé de contrôle selon la revendication 10, **caractérisé en ce qu'**on chauffe la plaque d'appui (22) entre 10°C et 70°C pour mesurer les caractéristiques du film en fonction de la température.
